# FASCICULE DE BREVET EUROPEEN

(11) **EP 3 156 635 B1**
(45) Date de publication et mention de la délivrance du brevet: **27.04.2022**
(21) Numéro de dépôt: 16193763.6
(22) Date de dépôt: 13.10.2016
(51) Int. Cl.: F02K 9/42, F02K 9/95

(54) **MOTEUR FUSÉE À TORCHE D'ALLUMAGE VERSATILE**
RAKETENTRIEBWERK MIT VIELSEITIGEM ZÜNDBRENNER
ROCKET ENGINE WITH VERSATILE SPARK TORCH

(30) Priorité: 14.10.2015 FR 1559765
(43) Date de publication de la demande: 19.04.2017
(73) Titulaire: ArianeGroup SAS, 78130 Les Mureaux (FR); CENTRE NATIONAL D'ETUDES SPATIALES, 75001 Paris (FR)
(72) Inventeur: LE CRAS, Jean-Luc, 27950 Saint-Marcel (FR); GOMET, Laurent, 78270 Blaru (FR); LESAUNIER, Louise, 27630 Heubecourt-Haricourt (FR); BOURDAIS, Jean-Claude, 27510 Panilleuse (FR); CRUZ, Carlos, 27600 Gaillon (FR)
(74) Mandataire: Cabinet Beau de Loménie

(56) Documents cités:
- US-A1- 2004 231 318
- US-A1- 2008 264 372

## Description

### DOMAINE DE L'INVENTION

L'invention concerne un moteur-fusée comprenant une chambre de combustion de moteur fusée et une torche d'allumage servant à initier une combustion dans la chambre de combustion de moteur-fusée.

### ETAT DE LA TECHNIQUE ANTERIEURE

Les moteurs-fusées fonctionnent généralement en provoquant la rencontre et la combustion de deux ergols, souvent de l'oxygène et de l'hydrogène, au sein d'une chambre de combustion : ce sont les gaz brûlés générés par cette combustion et s'échappant à très haute vitesse hors de la chambre de combustion, le plus souvent via un divergent ou une tuyère, qui, par réaction, produisent la poussée propulsant la fusée.

Une telle combustion, une fois démarrée, s'auto-entretient tant que l'alimentation en ergols est maintenue. Toutefois, le démarrage d'un tel moteur, mettant en œuvre de gros volumes d'ergols, nécessite une grande quantité d'énergie pour initier la combustion, quantité d'énergie qu'une simple bougie ne pourrait fournir. Ainsi, les moteurs-fusées sont équipés de torches d'allumages permettant d'initier la réaction de combustion dans la chambre de combustion du moteur et ainsi permettre le démarrage du moteur.

Ces torches d'allumage peuvent notamment être utilisées soit au lancement de la fusée (ou de l'engin spatial) ou à l'occasion de différentes phases de vol.

Des torches d'allumage pour moteur-fusée sont par exemple présentées par le document US2008/264372.

Parmi les torches d'allumages, on connaît les torches d'allumages pyrotechniques et les torches d'allumages à chambre de combustion interne. Ces dernières, contrairement aux torches d'allumages pyrotechniques, sont réutilisables et permettent donc un éventuel redémarrage du moteur en vol.

Une telle torche d'allumage consiste principalement en une petite chambre de combustion alimentée en ergols et munie d'une bougie capable d'enflammer la petite quantité d'ergols introduite dans la chambre : les gaz de combustion ainsi générés sont alors éjectés vers la chambre de combustion du moteur et sont suffisamment énergétiques pour y initier la combustion et démarrer le moteur.

Cependant, selon le mode de fonctionnement (appelé encore 'régime moteur') souhaité pour le moteur, les performances attendues de la torche d'allumage varient.

Les différents régimes moteurs se distinguent les uns des autres notamment par la température des gaz produits par la torche d'allumage et injectés dans le moteur pour permettre son démarrage, ou encore par le débit des gaz en sortie de la torche d'allumage. Les régimes moteur sont généralement caractérisés par leur 'rapport de mélange' RM, c'est-à-dire le ratio (en masse) des quantités relatives d'oxydant et de combustible injectés dans la torche. Lorsque le rapport de mélange RM est relativement élevé, à savoir supérieur à 1,5, la température des gaz produits par la torche d'allumage est généralement très élevée, ce qui rend souvent difficile d'assurer la tenue mécanique de la torche d'allumage durant un nombre suffisant d'allumages du moteur.

Il existe notamment :
- des torches d'allumage basse pression, alimentées en ergols pressurisés à la faible pression des réservoirs : malheureusement, ces derniers se retrouvent déficients dès lors qu'une contre-pression est présente dans la chambre de combustion, c'est-à-dire notamment au sol et à basse altitude. Ils dégagent en outre assez peu d'énergie et peuvent donc potentiellement échouer à démarrer le moteur et demander plusieurs tentatives avant le démarrage effectif du moteur ; et
- des torches d'allumages haute-pression, dans lesquels les ergols sont stockés dans des réservoirs pressurisés à haute pression. Toutefois, ces derniers sont lourds et donc très coûteux.

Ces différentes torches posent donc soit des problèmes de fiabilité, soit des problèmes de complexité et par suite, de prix, de poids et d'encombrement.

En particulier, aucune de ces torches ne constitue une solution simple et fiable pour réaliser une torche d'allumage exploitable à rapport de mélange élevé.

### PRESENTATION DE L'INVENTION

Aussi, l'objectif de l'invention est de proposer un moteur-fusée comprenant une chambre de combustion de moteur fusée ; une torche d'allumage servant à initier une combustion dans la chambre de combustion de moteur-fusée ; et un circuit de combustible et un circuit d'oxydant pour l'alimentation de la chambre de combustion de moteur fusée respectivement en combustible et en oxydant ; la chambre de combustion de moteur-fusée étant une chambre de combustion principale du moteur fusée, ou une chambre de combustion d'un générateur de gaz du moteur fusée, ou une préchambre de combustion du moteur-fusée, la torche d'allumage comportant un corps dans lequel est aménagée une chambre de combustion, et un tube d'éjection pour l'évacuation de gaz de combustion sortant de la chambre de combustion ; le tube d'éjection présentant une première extrémité par laquelle il est relié au corps, et une deuxième extrémité, disposée dans la chambre de combustion de moteur fusée ; le corps étant configuré pour permettre l'alimentation de la chambre de combustion en combustible et oxydant via respectivement un conduit d'alimentation en combustible et un conduit d'alimentation en oxydant ; une torche d'allumage qui soit fiable, relativement simple, et puisse être exploitée notamment pour un rapport de mélange élevé, induisant notamment des températures très élevées pour les gaz éjectés par la torche d'allumage.

Cet objectif est atteint grâce au fait que la torche d'allumage comporte en outre un conduit de réinjection d'oxydant configuré pour permettre une injection d'oxydant sensiblement à la sortie du tube d'éjection, et relié en amont au circuit d'alimentation en oxydant.

Par 'préchambre de combustion', dans le cas d'un moteur-fusée, on désigne une chambre de combustion dans laquelle du carburant est brûlé afin de produire des gaz chauds permettant d'actionner les turbopompes du moteur avant d'être ensuite réinjectés dans la chambre de combustion principale du moteur-fusée : une préchambre caractérise les moteurs-fusées à cycle de combustion étagé.

La deuxième injection d'oxydant (ou 'réinjection' d'oxydant) réalisée spécifiquement en sortie du tube d'éjection permet que la torche d'allumage produise une combustion du combustible en deux étapes :
En effet, elle permet tout d'abord une première combustion ou combustion principale, qui est celle qui se produit dans la chambre de combustion, alimentée par les canaux d'alimentation en combustible et en oxydant.

Mais grâce à l'injection d'oxydant en sortie du tube d'éjection par le conduit de réinjection d'oxydant, la torche d'allumage permet de plus qu'ait lieu une deuxième combustion à la sortie du tube d'éjection, cette deuxième combustion permettant d'élever très fortement la température des gaz éjectés par le tube d'éjection de la torche.

A titre d'exemple, on peut ainsi alimenter la chambre de combustion en combustible et en oxydant de telle sorte que la température dans la chambre soit d'environ 500 à 600 K à l'issue de la première combustion ; et ensuite, injecter en sortie du tube d'éjection une quantité d'oxydant permettant qu'à l'issue de la deuxième combustion, la température des gaz de sortie soit portée à 3600 K.

Aussi avantageusement, la structure de la torche d'allumage permet de maintenir le corps de la torche à une température relativement basse, sans qu'il ne soit trop sollicité thermiquement ou mécaniquement ; inversement, la deuxième combustion qui se produit à la sortie du tube d'éjection permet d'augmenter fortement la température des gaz éjectés par la torche et donc d'augmenter fortement la capacité de celle-ci à provoquer l'inflammation des ergols dans la chambre de combustion et à démarrer le moteur fusée. Avantageusement, la torche d'allumage selon l'invention peut donc fonctionner à fort rapport de mélange, et cela sans que la torche ne soit endommagée, du fait que seule l'extrémité du tube d'éjection est portée à très haute température.

De préférence, les débits de combustible et d'oxydant dans les canaux d'alimentation de la torche d'allumage sont choisis tels que la première combustion se fasse à une température relativement basse, afin de ne pas exposer notamment le corps de la torche d'allumage à des températures trop élevées qui seraient susceptibles de l'endommager.

Le moteur-fusée selon l'invention est particulièrement avantageux lorsque la chambre de combustion de moteur-fusée est de relativement grandes dimensions.

En effet, dans un mode de réalisation préférentiel, la distance minimale entre chaque paroi de la chambre de combustion de moteur fusée et la deuxième extrémité du tube d'éjection est supérieure à kD, où D est le diamètre intérieur de sortie du tube d'éjection, et k est un coefficient égal à 3, voire égal à 6, voire encore égal à 10.

Dans ces conditions, grâce au fait que la distance entre la deuxième extrémité du tube d'éjection et les parois de la chambre de combustion de moteur fusée est assez grande (ce que traduit le fait que cette distance soit supérieure à kD), même si la température à proximité de la deuxième extrémité du tube d'éjection devient très élevée, cela ne provoque pas une élévation de température de la paroi de la chambre de combustion de moteur fusée qui puisse endommager celle-ci.

Par conséquent, le moteur-fusée peut être exploité avec, pour la torche d'allumage, un rapport de mélange élevé.

On comprend par ailleurs que la « distance entre l'extrémité du tube d'éjection et les parois de la chambre » concerne essentiellement les parois de la chambre situées sur les côtés au niveau de l'extrémité du tube d'éjection, c'est-à-dire situées au voisinage d'un plan perpendiculaire à l'axe du tube d'éjection et passant par l'extrémité de ce tube ; inversement, la distance entre l'extrémité du tube d'éjection et les parois de la chambre ne concerne pas les parois arrière de la chambre, situées du côté arrière du tube d'éjection, c'est-à-dire du côté du corps de la torche. En effet, la flamme de la torche n'est pas dirigée dans cette direction et ainsi, cette flamme ne produit pas directement d'élévation de température de ces parois arrière.

Le rapport de mélange est défini par rapport aux proportions stochiométriques des deux ergols consommés. On se place dans le cas où la réaction entre les deux ergols se produisant dans la chambre de combustion de torche est de la forme : aA + bB --> cC + dD +..., expression dans laquelle A et B représentent respectivement l'oxydant et le combustible, a et b leurs proportions respectives, C, D, etc. représentent les composants produits par la combustion, comme de l'eau, du gaz carbonique, etc., et c, d, etc. sont les proportions respectives de ces composants.

Le rapport de mélange stochiométrique RM_{S} est défini comme étant égal au rapport RM_{S} = a/b.

On considère maintenant des conditions de réaction quelconques, dans lesquelles on fait réagir les ergols dans des quantités relatives x et y : on fait réagir xA + yB.

Dans ces conditions, le rapport de mélange normalisé RM_{N} est défini par : RM_{N} = (x/y)/RM_{S}.

Avantageusement, la configuration du moteur-fusée selon l'invention permet d'opérer la torche d'allumage avec un rapport de mélange normalisé RM_{N} élevé. Ainsi dans un mode de réalisation, le moteur-fusée est configuré pour que la torche d'allumage puisse être opérée avec un rapport de mélange normalisé (RM_{N}) supérieur à 5, voire supérieur à 10.

Dans un mode de réalisation particulièrement avantageux, le moteur-fusée peut ainsi être configuré à la fois pour que la torche d'allumage puisse être opérée à un rapport de mélange normalisé faible (c'est-à-dire RM_{N} <0,5, voire RM_{N} <0,25, voire même RM_{N} < 0,1), et pour que la torche d'allumage puisse aussi être opérée avec un rapport de mélange normalisé élevé (c'est-à-dire RM_{N} >5, voire RM_{N} >10).

Dans un mode de réalisation, le moteur-fusée peut être configuré pour que la torche d'allumage puisse être opérée à tout rapport de mélange normalisé RM_{N} compris entre un rapport de mélange normalisé faible et un rapport de mélange normalisé élevé, par exemple pour tout rapport de mélange RM_{N} compris entre 0,5 et 5, voire entre 0,1 et 10.

Pour permettre que la torche d'allumage soit opérée avec un rapport de mélange élevé, dans un mode de réalisation le moteur-fusée comporte une unité de commande électronique configurée pour assurer la commande de vannes d'apport en ergols dans la torche d'allumage, et l'unité de commande électronique est configurée pour pouvoir opérer la torche d'allumage avec un rapport de mélange normalisé RM_{N} élevé, notamment supérieur à 5 voire à 10.

La torche d'allumage peut être réalisée de différentes manières.

Dans un mode de réalisation, le conduit d'alimentation en combustible et le conduit d'alimentation en oxydant conduisent respectivement le combustible et l'oxydant à une chambre de prémixage, qui elle-même alimente la chambre de combustion en combustible et oxydant.

Dans un autre mode de réalisation, le combustible et l'oxydant sont conduits de manière séparée respectivement par le conduit d'alimentation en combustible et par le conduit d'alimentation en oxydant jusqu'à la chambre de combustion.

Dans un mode de réalisation, le corps est réalisé en une seule pièce formée intégralement. Le tube d'éjection peut éventuellement être également fabriqué dans la même pièce que le corps formée intégralement. La fabrication de la torche d'allumage peut se faire par exemple par un procédé additif de type impression 3D.

La torche d'allumage peut éventuellement être prévue pour pouvoir être exploitée en plusieurs points de fonctionnement (plusieurs rapports de mélange).

Pour faire varier le rapport de mélange, on peut par exemple prévoir que la torche permette la régulation en continu des débits d'alimentation en combustible, et/ou en oxydant, et/ou le débit de réinjection d'oxydant.

Dans ce but, dans un mode de réalisation la torche d'allumage comporte en outre une vanne de régulation d'alimentation en combustible et/ou une vanne de régulation d'alimentation en oxydant dans la chambre de combustion et/ou une vanne de régulation de réinjection d'oxydant, adaptée(s) pour réguler un débit respectivement d'alimentation en combustible dans la chambre de combustion, un débit d'alimentation en oxydant dans la chambre de combustion, et/ou un débit d'injection d'oxydant dans le conduit de réinjection d'oxydant.

Les vannes indiquées ci-dessus permettent de faire varier, éventuellement en temps réel pendant le vol, le rapport de mélange, et donc le débit et la température des gaz rejetés par la torche d'allumage. Ces vannes sont naturellement pilotées par des moyens de pilotage adaptés, par exemple une unité de commande électronique (ECU).

Pour agir sur les débits d'alimentation en combustible ou oxydant, et/ou sur le débit de réinjection d'oxydant, plutôt que d'utiliser une ou plusieurs vannes de régulation, on peut utiliser une ou plusieurs platines à section de passage calibrée. Une telle platine est une pièce, normalement sensiblement plate, percée d'un ou plusieurs passages ; la section de ce ou ces passages est déterminée avec précision, de telle sorte que l'on connaît à l'avance, en fonction des conditions de pression en amont et en aval de la platine, le débit de fluide qui traversera la platine.

Avantageusement, l'utilisation d'une ou plusieurs platines contrôlant les débits d'alimentation en combustible ou oxydant et/ou de réinjection d'oxydant peut permettre simultanément de régler le rapport de mélange et de piloter le refroidissement du tube d'éjection.

Aussi, dans un mode de réalisation, la torche d'allumage comporte en outre une platine d'alimentation en combustible à section de passage calibrée disposée sur le conduit d'alimentation en combustible, et/ou une platine d'alimentation en oxydant à section de passage calibrée disposée sur le conduit d'alimentation en oxydant, et/ou une platine de réinjection d'oxydant à section de passage calibrée disposée sur le conduit de réinjection d'oxydant.

Dans un mode de réalisation, au moins une des platines est démontable. Cela permet, simplement en remplaçant la platine considérée par une autre platine présentant une section de passage différente, de modifier le fonctionnement et les performances de la torche d'allumage.

Dans un mode de réalisation, la platine d'alimentation en oxydant et la platine de réinjection d'oxydant forment une seule et même platine. Cela permet de simplifier la structure de la torche d'allumage.

Un avantage considérable de la torche d'allumage selon l'invention est que sa structure permet de réduire la température atteinte par le corps de la torche d'allumage, du fait de la double combustion indiquée précédemment.

Cela étant, des dispositions complémentaires peuvent être adoptées pour réduire encore davantage la température atteinte par le corps et le tube d'éjection de la torche d'allumage.

Ainsi, dans un mode de réalisation, le conduit de réinjection d'oxydant est agencé au moins en partie dans une épaisseur d'une paroi du tube d'éjection.

Le conduit de réinjection d'oxydant sert alors de conduit de refroidissement pour le tube d'éjection. Notamment, une partie du conduit de réinjection d'oxydant peut être agencée le long du tube d'éjection, c'est-à-dire à distance constante de celui-ci. Elle peut par exemple être séparée du conduit interne du tube d'éjection par une paroi d'épaisseur constante.

De préférence, le conduit de réinjection d'oxydant est réalisé en grande partie dans l'épaisseur de la paroi du tube d'éjection ; il peut par exemple s'étendre en hélice autour de ce tube, sur un tour ou sur plusieurs tours.

Le refroidissement du corps de la torche peut être assuré par la circulation du combustible et de l'oxydant dans la paroi du corps de la torche.

On peut prévoir également que le conduit d'alimentation en combustible et/ou le conduit d'alimentation en oxydant présente une chicane formée dans le corps de la torche d'allumage. On considère ici qu'un conduit présente une chicane dès lors que, dans un plan passant par un centre de la chambre de combustion, ce conduit présente au moins un coude (ou changement de direction, en référence à une direction de circulation du fluide) d'angle supérieur à 90°, et de préférence à 120°.

De manière alternative ou complémentaire, on peut prévoir que le conduit d'alimentation en combustible et/ou le conduit d'alimentation en oxydant et/ou le conduit de réinjection d'oxydant comporte une portion d'amortissement thermique. Par 'portion d'amortissement thermique', on désigne ici une portion de conduit qui s'étend dans la paroi du corps de la torche et suivant une direction faisant un angle supérieur à 45° par rapport à une direction radiale vis-à-vis d'un centre de la chambre de combustion. Le fluide circule donc dans la portion d'amortissement thermique suivant une direction faisant un angle supérieur à 45° par rapport à la direction radiale : il circule donc sans se rapprocher directement de la chambre de combustion. Cette circulation lui permet d'échanger de la chaleur avec le corps de la torche et ainsi d'assurer le refroidissement de celui-ci.

Dans un mode de réalisation, le conduit d'alimentation en combustible et/ou le conduit d'alimentation en oxydant couvre un angle solide important (par exemple, au moins 2 stéradian), par rapport à un centre de la chambre de combustion.

En effet pour favoriser l'échange thermique, le corps de la torche est conçu de telle sorte que la surface d'échange soit maximale, tout en veillant cependant à ce que les épaisseurs de métal soient suffisantes pour assurer la tenue mécanique de la torche.

### Fixation

Il est par ailleurs généralement préférable d'éviter que la température assez élevée de la torche d'allumage ne se communique à d'autres parties du moteur fusée.

Aussi, dans un mode de réalisation, le corps présente une bride de fixation agencée autour du tube d'éjection. En effet, la température du tube d'éjection peut éventuellement être plus basse que celle du corps.

Pour éviter une hausse de température de cette bride, la torche d'allumage peut comporter en outre un passage d'isolation thermique, agencé radialement entre un conduit intérieur du tube d'éjection et la bride, et isolé fluidiquement du conduit de réinjection d'oxydant (c'est-à-dire sans possibilité d'échange de fluide avec celui-ci). Cette chambre est de préférence en communication avec l'atmosphère extérieure à la torche d'allumage. Elle peut faire partie du corps lui-même, ou du tube d'éjection, ou être agencée au moins en partie entre les deux.

### BREVE DESCRIPTION DES DESSINS

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :
- la figure 1 est une vue schématique en coupe d'un moteur fusée équipé d'une torche d'allumage dans un premier mode de réalisation de l'invention ;
- la figure 2 est une vue schématique en perspective de la torche d'allumage de la figure 1 ;
- la figure 3 est une vue schématique en coupe de la torche d'allumage de la figure 1 ;
- la figure 3A est une vue de détail extraite de la figure 3 ; et
- la figure 4 est une vue schématique en coupe d'une torche d'allumage dans un deuxième mode de réalisation de l'invention.

### DESCRIPTION DETAILLEE DE L'INVENTION

Dans les figures, les éléments similaires ou identiques portent la même référence numérique.

### Premier mode de réalisation

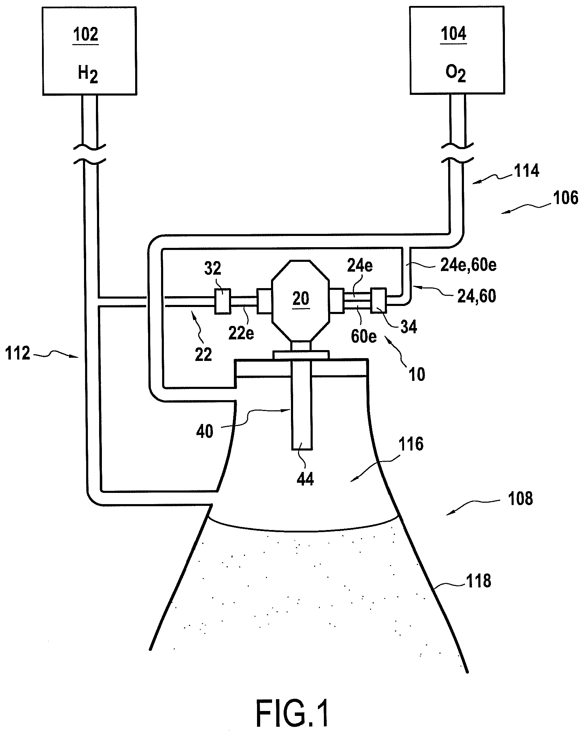

En faisant référence à la figure 1, un moteur fusée 100 équipé d'une torche d'allumage 10 selon l'invention va maintenant être décrit.

Le moteur fusée 100 est constitué principalement par une tuyère 108 dans laquelle se trouve sa chambre de combustion principale 116 (chambre de combustion de moteur-fusée).

Il comporte en outre un circuit d'alimentation 106, qui permet son alimentation à partir de deux réservoirs d'ergols 102 et 104, et d'autres équipements non représentés.

Les deux réservoirs 102 et 104 sont respectivement un réservoir d'hydrogène liquide 102 et un réservoir d'oxygène liquide 104. L'hydrogène est donc le combustible et l'oxygène l'oxydant. Naturellement, bien que la description qui suit fasse référence à l'hydrogène en tant que combustible et à l'oxygène en tant qu'oxydant, l'invention peut être mise en œuvre avec tout autre couple adapté de combustible et d'oxydant ; aussi dans la description qui suit, les termes 'hydrogène' et 'oxygène' doivent être compris comme pouvant être remplacés respectivement par les termes 'combustible' et 'oxydant', au sens de l'invention.

La tuyère 108 comporte principalement la chambre principale de combustion 116, située dans sa partie supérieure, et un divergent 118. La torche d'allumage 10 est fixée en haut de la tuyère 108, pour permettre de lancer la combustion des ergols dans la chambre de combustion 116 et ainsi faire démarrer le moteur 100.

(Les positions mentionnées : 'en haut', 'en bas', font référence à la position habituelle du moteur pendant son stockage, telle que représentée sur les figures, qui ne correspond pas nécessairement à l'orientation du moteur en exploitation).

Le circuit d'alimentation 106 sert à alimenter la chambre principale de combustion 116 du moteur 100 en combustible et en oxydant.

Il comporte pour cela un circuit d'hydrogène 112 et un circuit d'oxygène 114, équipés de pompes non-représentées pour pomper respectivement l'hydrogène et l'oxygène du réservoir correspondant vers la chambre de combustion 116, de manière connue en soi.

La torche 10 comprend un corps 20 et un tube d'éjection 40. Elle est disposée de telle sorte que l'extrémité du tube d'éjection 40 soit disposée dans la chambre de combustion 116 ; la flamme produite par la torche 10 permet donc d'initier la combustion des ergols dans la chambre 116 et donc de faire démarrer le moteur-fusée 100.

Dans le corps 20 est aménagée une chambre de combustion interne 21 (chambre de combustion de torche), de faibles dimensions, qui est reliée par des conduits 22 et 24 respectivement au circuit d'hydrogène 112 et au circuit d'oxygène 114.

Les débits d'hydrogène et d'oxygène dans les conduits 22 et 24 sont régulés respectivement par des vannes de régulation 32 et 34, pilotées par une unité de commande électronique 50.

La torche d'allumage 10 comporte en outre un conduit 60 de réinjection d'oxygène, dont l'agencement sera précisé plus loin. Le débit dans celui-ci est également régulé par la vanne de régulation 34.

La torche d'allumage 10 fonctionne de la manière suivante.

Cette torche sert à allumer le moteur 100, c'est-à-dire à initier la combustion de l'hydrogène et de l'oxygène injectés dans la chambre de combustion 116.

Cette combustion est initiée par les gaz rejetés par la torche 10 dans la chambre 116. La température de ces gaz est très élevée afin d'assurer l'inflammation des ergols dans la chambre 116.

Cette température fait partie des conditions imposées aux gaz produits par la torche pour leur injection dans la chambre. Ces conditions sont déterminées pour assurer la combustion la plus complète possible dans la chambre de combustion, qui se produit usuellement dans une chambre principale de moteur fusée à une température de l'ordre de 2400K à 3000K. Pour atteindre cet objectif, en général la température des gaz injectés est supérieure voire nettement supérieure à 1000K.

Les gaz rejetés par la torche 10 sont produits par la combustion de l'hydrogène dans l'oxygène à l'intérieur de la chambre de combustion interne 21 : on injecte simultanément de l'hydrogène et de l'oxygène dans la chambre 21 (via les conduits 22 et 24) ; ceux-ci sont enflammés par des étincelles produites par une bougie d'allumage 37 prévue dans la chambre 21.

Leur combustion produit de la vapeur d'eau à haute température. Les gaz produits sont donc un mélange de vapeur d'eau et, selon le ratio hydrogène/oxygène introduit, de l'hydrogène ou de l'oxygène résiduel.

En outre, le conduit de réinjection d'oxygène permet un apport complémentaire d'oxygène en sortie (ou au voisinage de la sortie) du tube d'éjection 40.

Le rapport de mélange global de la torche 10 est donc déterminé non seulement par les quantités d'hydrogène et d'oxygène introduites dans la chambre 21, mais également par la quantité d'oxygène injectée par le conduit 60 de réinjection d'oxygène.

Le rapport de mélange de la torche 10 peut donc être modulé ou piloté en commandant de manière adaptée les débits de fluide dans les conduits 22, 24 et 60 à l'aide des vannes 32 et 34 (La vanne 34 permet le pilotage des débits à la fois dans les conduits 24 et 60 ; il aurait été possible de prévoir deux vannes distinctes).

Le moteur 100 est commandé par l'unité de commande électronique 50. Celle-ci notamment contrôle à chaque instant le rapport de mélange de la torche 10, en régulant ou pilotant l'ouverture des vannes 32 et 34.

L'extrémité du tube d'éjection 40 est placée à distance d des parois de la chambre de combustion 116. Cette distance est choisie comme étant suffisamment élevée pour que même si la température de la flamme produite par la torche est extrêmement élevée, la température atteinte par les parois de la chambre 116 reste nettement plus faible.

Dans l'exemple considéré, la distance d entre l'extrémité du tube 40 et la paroi de la chambre 116 est ainsi supérieure au triple du diamètre intérieur du tube 40 (Fig.1).

L'unité de commande électronique 50 est configurée pour réguler la torche à un rapport de mélange normalisé variant entre 0,1 et 10. Grâce à cela, la torche peut être utilisée pour initier la combustion dans la chambre 116 dans des conditions très variées ; par suite, le moteur-fusée est apte à réaliser des missions très diverses.

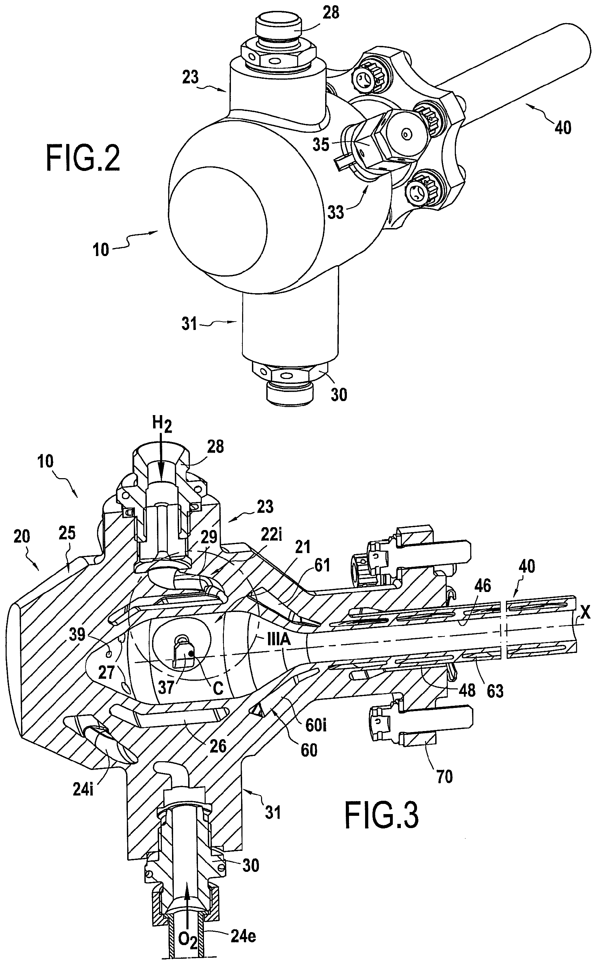

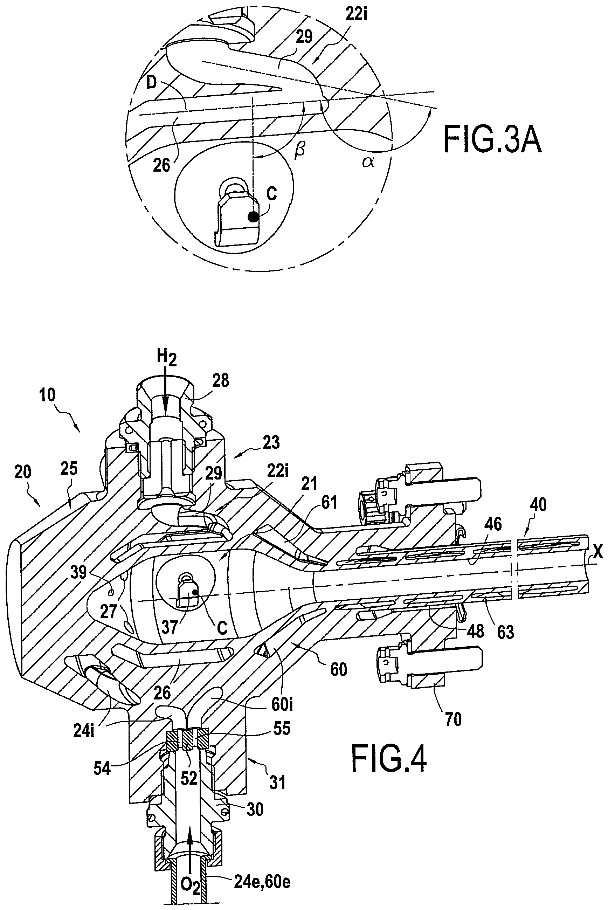

La structure interne de la torche d'allumage 10 va maintenant être décrite en référence aux figures 2, 3 et 3A.

Le corps 20 est fabriqué en fabrication additive par frittage de poudres métalliques.

Sa partie centrale est occupée par la chambre de combustion 21. Celle-ci a une forme de navette ou d'ellipsoïde allongé, ayant sensiblement une forme de révolution suivant l'axe X du tube d'éjection 40, qui est disposé dans le prolongement de la chambre 21.

Le corps 20 se présente donc comme une enceinte à paroi épaisse 25, formée autour de la chambre de combustion 21.

Il présente trois projections en saillie 23, 31 et 33 dans lesquelles sont fixés des raccords externes 28, 30 et 35 pour faire passer respectivement les conduits d'alimentation en combustible (hydrogène) et en oxydant (oxygène) 22 et 24, et le conduit de réinjection d'oxygène 60.

Aussi, chacun des conduits 22, 24 et 60 est formé en plusieurs parties :
- une portion de tuyau 22e,24e,60e, qui relie selon le cas l'un ou l'autre des conduits d'alimentation 112, 114 au corps 20, via une vanne de régulation 32 ou 34 ;
- une portion du raccord externe 28, 30 ou 35 respectivement ; et
- une portion de conduit interne 22i,24i,60i aménagée dans l'épaisseur de la paroi du corps 20 et/ou du tube 40.

Les conduits d'alimentation 22i et 24i internes au corps 20 servent donc à conduire l'hydrogène et l'oxygène depuis les raccords externes 28,30 jusqu'à la chambre de combustion 21.

Le conduit 60 de réinjection d'oxygène est relié en amont au circuit 114 d'alimentation en oxygène. En amont de la vanne 34, il comporte une portion de tuyau commune avec le conduit 24 (notée 24,60). En aval de cette vanne, il comporte une portion de tuyau reliée au raccord 35. Il comporte alors une portion interne 60i (appelée aussi conduit interne 60i) allant du raccord 35 jusqu'à la sortie du tube 40 au niveau de laquelle il permet donc d'injecter de l'oxygène pour provoquer la deuxième combustion.

La chambre de combustion 21 permet la combustion de l'hydrogène dans l'oxygène ; cette combustion est initiée par une bougie d'allumage ou tout autre système d'initiation ou d'apport d'énergie 37 disposé dans la chambre de combustion.

Cette combustion produit des gaz de combustion, qui sont évacués de la chambre de combustion 21 via le tube d'éjection 40. Cela étant la combustion de l'hydrogène dans l'oxygène se produit non seulement dans la chambre de combustion, mais également dans le tube d'éjection 40 et à l'extérieur de celui-ci dans la chambre de combustion 116.

Le tube 40 présente deux extrémités : une première extrémité par laquelle il est relié au corps 20, et une deuxième extrémité ou sortie 44, qui est placée dans la chambre de combustion principale 116 du moteur fusée.

Le tube 40 présente un conduit interne 46 qui part de la chambre de combustion 21 et débouche dans la chambre de combustion principale 116.

Pour réduire les contraintes mécaniques dans le corps 20 qui peuvent être causées par les différences de température très élevées entre les ergols (hydrogène, oxygène) qui sont ou peuvent être extrêmement froids, et les gaz de combustion qui au contraire sont chauds, les dispositions suivantes sont adoptées.

Tout d'abord, la paroi 25 du corps est particulièrement épaisse ; les conduits internes 22i,24i d'alimentation en hydrogène et en oxygène n'injectent pas l'hydrogène ou l'oxygène directement dans la chambre de combustion 21 mais au contraire présentent des chicanes dans l'épaisseur de la paroi 25 pour que le fluide qu'ils transportent se réchauffe partiellement avant d'être injecté dans la chambre 21. Cela permet donc de réduire la température de la paroi 25.

### Conduit interne 22i d'alimentation en hydrogène

Pour favoriser l'échange thermique entre l'hydrogène et le corps 20 de la torche (figures 3 et 3A), le conduit interne 22i d'alimentation en hydrogène présente une chambre intermédiaire cylindrique 26 qui entoure la chambre de combustion 21 (tout au moins dans une vue suivant l'axe du tube 40).

Cette chambre cylindrique forme une portion d'amortissement thermique. Dans cette chambre en effet, l'hydrogène circule suivant une direction D qui, dans le plan de coupe, est parallèle à l'axe X du tube d'éjection : cette direction D forme un angle β par rapport à la direction radiale (vis-à-vis du centre C de la chambre de combustion) ; l'angle β vaut 90° et est donc nettement supérieur à 45°.

Dans la chambre intermédiaire 26, l'hydrogène circule donc à l'intérieur de la paroi 25 sans se rapprocher de la chambre de combustion 21 ; cela permet que des échanges thermiques importants aient lieu entre l'hydrogène et le corps 20 et qu'ainsi la température du corps 20 ne s'élève pas de manière inacceptable.

En amont, la chambre intermédiaire 26 est reliée au raccord 28 par un tronçon de liaison 29. En aval, la chambre intermédiaire 26 est reliée à la chambre de combustion 21 par des trous d'injection 27.

Comme on peut le voir sur la figure 3A (détail extrait de la coupe axiale de la figure 3), le conduit 22 d'alimentation en hydrogène présente, dans le plan de coupe (qui passe par le centre C de la chambre de combustion 21), au moins un coude d'angle α supérieur à 120°.

Ainsi, dans ce mode de réalisation le conduit 22 d'alimentation en hydrogène comporte une chicane ; le carburant (l'hydrogène) est donc contraint de circuler dans la paroi 25 du corps 20 sur une certaine distance, ce qui favorise les échanges thermiques entre l'hydrogène et le corps 20 et permet ainsi de maintenir celui-ci à une température suffisamment basse.

### Conduit interne 24i d'alimentation en oxygène

Le conduit interne 24i relie le raccord 30 à des trous d'injection d'oxygène 39 aménagés dans la paroi de la chambre de combustion 21.

### Conduit 60 de réinjection d'oxygène

Le conduit interne 60i est aménagé dans l'épaisseur tout d'abord du corps 20, puis plus en aval dans l'épaisseur du tube d'éjection 40.

Comme le conduit 22i, le conduit 60i comporte une portion d'amortissement thermique constituée par une chambre intermédiaire 61. Cette chambre a une forme de révolution autour de l'axe X et est agencée autour de l'extrémité de la chambre 21 située du côté du tube d'éjection 40. Le conduit 60i relie la chambre 61 au raccord 35 via une portion de conduit non représentée.

En aval de la chambre 61, le conduit 60i est agencé à l'intérieur de la paroi du tube 40. Dans cette partie, le conduit 60i forme une hélice 63 à plusieurs spires autour du tube 40, ce qui permet de maximiser les échanges thermiques entre le tube 40 et l'oxygène.

A l'extrémité du tube 40, le conduit 60i débouche dans la chambre de combustion 116 du moteur 100. Il rejette donc l'oxygène sensiblement au point de sortie des gaz rejetés par le tube d'éjection 40.

### Fixation

La torche d'allumage 10 présente en outre une bride de fixation 70 agencée autour du tube 40 et qui sert à la fixer sur la tuyère 108.

Dans ce but, entre le corps 20 et la bride 70, la paroi du tube 40 est très épaisse ; elle a ainsi une résistance mécanique suffisante pour transmettre le poids du corps 20 à la bride 70.

Cette épaisseur est mise à profit pour isoler thermiquement le tube 40 de la bride, et ainsi éviter une hausse de température de celle-ci.

En effet, le tube 40 présente un passage d'isolation thermique 48. Ce passage est agencé radialement entre le conduit intérieur 46 du tube 40 et la bride 70.

Il s'étend de plus axialement (sur l'axe X) en amont et en aval par rapport au plan de fixation de la bride 70 sur le tube 40.

Le passage 48 est isolé des fluides (respectivement gaz de combustion et oxygène) circulant dans les conduits 46 et 60 ; il n'est en communication qu'avec l'atmosphère environnant la torche 10.

Dans le mode de réalisation présenté, le passage 48 communique avec l'atmosphère située du côté opposé au corps 20, par rapport à la bride 70. Dans un autre mode de réalisation, le passage (ou chambre) 48 pourrait communiquer avec l'atmosphère située du même côté que le corps 20 par rapport à la bride 70.

### Deuxième mode de réalisation

Un deuxième mode de réalisation de la torche d'allumage 10 va maintenant être présenté en relation avec la figure 4. Ce deuxième mode de réalisation est identique au premier mode de réalisation, à l'exception de certaines caractéristiques qui vont être précisées ci-dessous.

La différence entre les premier et deuxième modes de réalisation tient au mode de régulation en oxygène et hydrogène.

Dans le premier mode de réalisation, les vannes 32 et 34 permettent de réguler chacun des débits d'hydrogène et oxygène dans les conduits 22, 24 et 60.

Par contraste, dans le deuxième mode de réalisation ces trois débits ne sont pas régulés par des vannes de régulation mais sont contrôlés simplement par l'utilisation de platines à section de passage calibrée.

Dans le mode de réalisation présenté, pour simplifier la fabrication le corps 20 ne comporte pas de projection en saillie 33, et donc pas de raccord externe 35.

Dans ce mode de réalisation, depuis le raccord 30, un même tuyau 24e,60e constitue la portion externe du conduit 24 et du conduit 60. Ce tuyau relie le raccord 30 directement au circuit 114 ; il n'y a pas de vanne de régulation 34.

De même un autre tuyau forme le conduit 22e et relie directement le raccord 28 au circuit 112 ; il n'y a pas non plus de vanne de régulation 32.

Le conduit interne 24i et le conduit interne 60i sont tous deux reliés en amont à une platine calibrée 52, disposée contre le raccord 30 et reliée au conduit 24e,60e par l'intermédiaire de celui-ci.

La platine calibrée 52 est une plaque en forme de disque présentant deux orifices calibrés 54 et 55. Les orifices calibrés 54 et 55 forment des restrictions qui contrôlent le débit de fluide respectivement dans les conduits 24i et 60i.

Avantageusement, la platine 52 est démontable : Après avoir dévissé le raccord 30, il est facile de démonter la platine pour la remplacer par une autre.

On peut par exemple remplacer une platine 52 par une autre platine 52' dont les orifices calibrés 54' et 55' présenteraient des sections de passage différentes de celles des orifices 54 et 55 : ce changement permet alors de manière simple de modifier le rapport de mélange de la torche 10 ainsi que le mode de refroidissement du tube 40.

Quoique la présente invention ait été décrite en se référant à des exemples de réalisation spécifiques, il est évident que des différentes modifications et changements peuvent être effectués sur ces exemples sans sortir de la portée générale de l'invention telle que définie par les revendications.

## Revendications

1. Moteur fusée (100), comprenant :
une chambre de combustion de moteur fusée (116) ;
une torche d'allumage (10) pour initier une combustion dans la chambre de combustion de moteur-fusée (116) ; et
un circuit de combustible (112) et un circuit d'oxydant (114) pour l'alimentation de la chambre de combustion de moteur fusée (116) respectivement en combustible et en oxydant ;
la chambre de combustion de moteur fusée étant une chambre de combustion principale du moteur fusée (116), ou une chambre de combustion d'un générateur de gaz du moteur fusée, ou une préchambre de combustion du moteur-fusée ;
la torche d'allumage (10) comportant :
un corps (20) dans lequel est aménagée une chambre de combustion de torche (21) ;
un tube d'éjection (40) pour l'évacuation de gaz de combustion sortant de la chambre de combustion de torche (21) ;
le tube d'éjection (40) présentant une première extrémité par laquelle il est relié au corps (20), et une deuxième extrémité (44), disposée dans la chambre de combustion de moteur fusée ;
le corps (20) étant configuré pour permettre l'alimentation de la chambre de combustion de torche en combustible et oxydant via respectivement un conduit (22) d'alimentation en combustible et un conduit (24) d'alimentation en oxydant ;
le moteur fusée (100) **se caractérisant en ce que** la torche d'allumage (10) comporte en outre un conduit (60) de réinjection d'oxydant configuré pour permettre une injection d'oxydant sensiblement à la sortie du tube d'éjection (40), et relié en amont au circuit (114) d'alimentation en oxydant.

2. Moteur-fusée (100) selon la revendication 1, comportant en outre une vanne (32) de régulation d'alimentation en combustible et/ou une vanne (34) de régulation d'alimentation en oxydant dans la chambre de combustion et/ou une vanne (32) de régulation de réinjection d'oxydant, adaptée(s) à réguler un débit respectivement d'alimentation en combustible dans la chambre de combustion de torche, un débit d'alimentation en oxydant dans la chambre de combustion de torche, et/ou un débit d'injection d'oxydant dans le conduit (60) de réinjection d'oxydant.

3. Moteur-fusée (100) selon la revendication 1 ou 2, comportant en outre une platine (52) d'alimentation en combustible à section de passage calibrée disposée sur le conduit d'alimentation en combustible, et/ou une platine d'alimentation en oxydant à section de passage calibrée disposée sur le conduit d'alimentation en oxydant, et/ou une platine de réinjection d'oxydant à section de passage calibrée disposée sur le conduit de réinjection d'oxydant.

4. Moteur-fusée (100) selon la revendication 3, dont ladite platine (52) ou au moins une desdites platines est démontable.

5. Moteur-fusée (100) selon la revendication 3 ou 4, dans lequel la platine d'alimentation en oxydant et la platine de réinjection d'oxydant forment une seule et même platine (52).

6. Moteur-fusée (100) selon l'une quelconque des revendications 1 à 5, dont le conduit (60) de réinjection d'oxydant est agencé au moins en partie dans une épaisseur d'une paroi du tube d'éjection (40).

7. Moteur-fusée (100) selon l'une quelconque des revendications 1 à 6, dans lequel le conduit (22) d'alimentation en combustible et/ou le conduit d'alimentation en oxydant (24) présente une chicane formée dans le corps (20) de la torche d'allumage (10).

8. Moteur-fusée (100) selon l'une quelconque des revendications 1 à 7, dans lequel le conduit (22) d'alimentation en combustible et/ou le conduit (24) d'alimentation en oxydant et/ou le conduit (60) de réinjection d'oxydant comporte une portion d'amortissement thermique (26) qui s'étend dans la paroi (25) du corps (20) de la torche suivant une direction faisant un angle supérieur à 45° par rapport à une direction radiale vis-à-vis d'un centre (C) de la chambre de combustion de torche (21).

9. Moteur-fusée (100) selon l'une quelconque des revendications 1 à 8, présentant une bride de fixation agencée autour du tube d'éjection, et un passage (48) d'isolation thermique, agencé radialement entre un conduit intérieur (46) du tube d'éjection et la bride (70), et isolé fluidiquement du conduit de réinjection d'oxydant.

10. Moteur fusée (100) selon l'une quelconque des revendications 1 à 9, **caractérisé en ce qu'**il est configuré pour que la torche d'allumage puisse être opérée avec un rapport de mélange normalisé (RM_{N}) supérieur à 5.

11. Moteur fusée (100) selon l'une quelconque des revendications 1 à 10, dans lequel une distance minimale entre chaque paroi de la chambre de combustion de moteur-fusée et la deuxième extrémité (44) du tube d'éjection (40) est supérieure à kD, où D est le diamètre intérieur de sortie du tube d'éjection (40), et k est un coefficient égal à 3.

## Patentansprüche

1. Raketentriebwerk (100), umfassend:
eine Raketentriebwerksbrennkammer (116),
einen Fackelzünder (10) zum Initiieren einer Verbrennung in der Raketentriebwerksbrennkammer (116), und
einen Brennstoffkreislauf (112) und einen Oxidationsmittelkreislauf (114) zur Versorgung der Raketentriebwerksbrennkammer (116) mit Brennstoff bzw. Oxidationsmittel,
wobei die Raketentriebwerksbrennkammer eine Hauptraketentriebwerks-Brennkammer (116) oder eine Brennkammer eines Gasgenerators des Raketentriebwerks oder eine Vorbrennkammer des Raketentriebwerks ist,
wobei der Fackelzünder (10) beinhaltet:
einen Körper (20), in dem eine Fackelbrennkammer (21) angeordnet ist,
ein Ausstoßrohr (40) zum Abführen von Verbrennungsgas, das die Fackelbrennkammer (21) verlässt,
wobei das Ausstoßrohr (40) ein erstes Ende, wodurch es mit dem Körper (20) verbunden ist, und ein zweites Ende (44) aufweist, das in der Raketentriebwerksbrennkammer angeordnet ist,
wobei der Körper (20) dazu ausgestaltet ist, die Versorgung der Fackelbrennkammer mit Brennstoff und Oxidationsmittel über eine Brennstoffversorgungsleitung (22) bzw. eine Oxidationsmittelversorgungsleitung (24) zu ermöglichen,
wobei das Raketentriebwerk (100) **dadurch gekennzeichnet ist, dass** der Fackelzünder (10) ferner eine Oxidationsmittelrückführleitung (60) beinhaltet, die dazu ausgestaltet ist, eine Einspritzung von Oxidationsmittel im Wesentlichen am Ausgang des Ausstoßrohres (40) zu ermöglichen, und davor mit dem Oxidationsmittelversorgungskreislauf (114) verbunden ist.

2. Raketentriebwerk (100) nach Anspruch 1, das ferner ein Ventil (32) zur Regelung der Brennstoffversorgung und/oder ein Ventil (34) zur Regelung der Versorgung mit Oxidationsmittel in der Brennkammer und/oder ein Ventil (32) zur Regelung der Wiedereinspritzung von Oxidationsmittel beinhaltet, das bzw. die angepasst ist bzw. sind, um jeweils eine Zufuhrmenge von Brennstoff in der Fackelbrennkammer, eine Zufuhrmenge von Oxidationsmittel in der Fackelbrennkammer und/oder eine Einspritzmenge von Oxidationsmittel in der Oxidationsmittelrückführleitung (60) zu regeln.

3. Raketentriebwerk (100) nach Anspruch 1 oder 2, das ferner eine Platine (52) zur Versorgung mit Brennstoff mit einem kalibrierten Durchlassquerschnitt, die an der Brennstoffversorgungsleitung angeordnet ist, und/oder eine Platine zur Versorgung mit Oxidationsmittel mit einem kalibrierten Durchlassquerschnitt, die an der Oxidationsmittelversorgungsleitung angeordnet ist, und/oder eine Platine zur Wiedereinspritzung von Oxidationsmittel mit einem kalibrierten Durchlassquerschnitt beinhaltet, die an der Oxidationsmittelrückführleitung angeordnet ist.

4. Raketentriebwerk (100) nach Anspruch 3, wobei die Platine (52) oder mindestens eine der Platinen demontierbar ist.

5. Raketentriebwerk (100) nach Anspruch 3 oder 4, wobei die Platine zur Versorgung mit Oxidationsmittel und die Platine zur Wiedereinspritzung von Oxidationsmittel eine einzige Platine (52) bilden.

6. Raketentriebwerk (100) nach einem der Ansprüche 1 bis 5, wobei die Oxidationsmittelrückführleitung (60) zumindest teilweise in einer Tiefe einer Wand des Ausstoßrohres (40) eingerichtet ist.

7. Raketentriebwerk (100) nach einem der Ansprüche 1 bis 6, wobei die Brennstoffversorgungsleitung (22) und/oder die Oxidationsmittelversorgungsleitung (24) ein Ablenkblech aufweist bzw. aufweisen, das in dem Körper (20) des Fackelzünders (10) ausgebildet ist.

8. Raketentriebwerk (100) nach einem der Ansprüche 1 bis 7, wobei die Brennstoffversorgungsleitung (22) und/oder die Oxidationsmittelversorgungsleitung (24) und/oder die Oxidationsmittelrückführleitung (60) einen Abschnitt (26) für die thermische Dämpfung beinhaltet bzw. beinhalten, der sich in der Wand (25) des Körpers (20) der Fackel entlang einer Richtung erstreckt, die in Bezug auf eine radiale Richtung gegenüber einem Zentrum (C) der Fackelbrennkammer (21) einen Winkel beschreibt, der größer als 45° ist.

9. Raketentriebwerk (100) nach einem der Ansprüche 1 bis 8, das einen Befestigungsflansch, der um das Ausstoßrohr eingerichtet ist, und einen Durchlass (48) zur Wärmedämmung aufweist, der radial zwischen einer inneren Leitung (46) des Ausstoßrohres und dem Flansch (70) eingerichtet und fluidisch von der Oxidationsmittelrückführleitung beabstandet ist.

10. Raketentriebwerk (100) nach einem der Ansprüche 1 bis 9, **dadurch gekennzeichnet, dass** es dazu ausgestaltet ist, dass der Fackelzünder mit einem normierten Mischungsverhältnis (RM_{N}) betrieben werden kann, das größer als 5 ist.

11. Raketentriebwerk (100) nach einem der Ansprüche 1 bis 10, wobei ein Mindestabstand zwischen jeder Wand der Raketentriebwerksbrennkammer und dem zweiten Ende (44) des Ausstoßrohres (40) größer als kD ist, wobei D der Innendurchmesser des Ausgangs des Ausstoßrohres (40) ist und k ein Koeffizient ist, der 3 entspricht.

## Claims

1. A rocket engine (100), comprising:
a rocket engine combustion chamber (116);
an ignition torch (10) for initiating combustion in the rocket engine combustion chamber (116); and
a fuel circuit (112) and an oxidizer circuit (114) to supply the rocket engine combustion chamber (116) respectively with fuel and oxidizer;
the rocket engine combustion chamber being a main combustion chamber of the rocket engine (116), or a combustion chamber of a gas generator of the rocket engine, or a combustion chamber of a preburner of the rocket engine;
the ignition torch (10) comprising:
a body (20) in which a torch combustion chamber (21) is arranged;
an ejection tube (40) for discharging the combustion gas leaving the torch combustion chamber (21);
the ejection tube (40) having a first end whereby it is connected to the body (20) and a second end (44) arranged in the rocket engine combustion chamber;
the body (20) being configured to allow the torch combustion chamber to be fed with fuel and oxidizer respectively via a fuel feed duct (22) and an oxidizer feed duct (24);
the rocket engine being **characterized in that** the ignition torch further comprises an oxygen reinjection duct (60) configured to enable oxygen to be injected substantially at the outlet of the ejection tube (40), and connected upstream to the oxidizer feed circuit (114) .

2. A rocket engine (100) according to claim 1, further including a fuel feed regulator valve (32) and/or an oxidizer feed regulator valve (34) for feeding the combustion chamber and/or an oxidizer reinjection regulator valve (32), which valve(s) is/are adapted to regulate respectively fuel feed to the torch combustion chamber, oxidizer feed to the torch combustion chamber, and/or an oxidizer injection flow into the oxidizer reinjection duct (60).

3. A rocket engine (100) according to claim 1 or 2, further comprising a fuel feed plate (52) of calibrated flow section arranged in the fuel feed duct, and/or an oxidizer feed plate of calibrated flow section arranged in the oxidizer feed duct, and/or an oxidizer reinjection plate of calibrated section arranged in the oxidizer reinjection duct.

4. A rocket engine (100) according to claim 3, wherein said plate (52) or at least one of said plates is removable.

5. A rocket engine (100) according to claim 3 or 4, wherein the oxidizer feed plate and the oxidizer reinjection plate form a single plate (52).

6. A rocket engine (100) according to any one of claims 1 to 5, wherein the oxidizer reinjection duct (60) is arranged at least in part in the thickness of a wall of the ejection tube (40).

7. A rocket engine (100) according to any one of claims 1 to 6, wherein the fuel feed duct (22) and/or the oxidizer feed duct (24) present(s) a respective baffle formed in the body (20) of the ignition torch (10).

8. A rocket engine (100) according to any one of claims 1 to 7, wherein the fuel feed duct (22) and/or the oxidizer feed duct (24), and/or the oxidizer rejection duct (60) include(s) a respective thermal shock absorber portion (26) extending within the wall (25) of the body (20) of the torch in a direction that makes an angle greater than 45° relative to a radial direction with respect to a center (C) of the torch combustion chamber (21).

9. A rocket engine (100) according to any one of claims 1 to 8, presenting a fastener flange arranged around the ejection tube, and a thermal insulation passage (48) arranged radially between an internal duct (46) of the ejection tube and the flange (70), and in fluid flow isolation from the oxidizer reinjection duct.

10. A rocket engine (100) according to any one of claims 1 to 9, **characterized in that** it is configured so that the ignition torch can operate with a normalized mixture ratio (RM_{N}) greater than 5.

11. A rocket engine (100) according to any one of claims 1 to 10, wherein a minimum distance between each wall of the rocket engine combustion chamber and the second end (44) of the ejection tube (40) is greater than kD, where D is the inside diameter at the outlet of the ejection tube (40), and k is a coefficient equal to 3.
